# EUROPÄISCHE PATENTSCHRIFT

(11) **EP 4 188 708 B1**
(45) Veröffentlichungstag und Bekanntmachung des Hinweises auf die Patenterteilung: **25.12.2024**
(21) Anmeldenummer: 21758612.2
(22) Anmeldetag: 27.07.2021
(51) Int. Cl.: B32B 27/30, B32B 27/08, E04F 15/10, B32B 27/32

(54) **EBENE PLATTEN UND VERFAHREN ZU DEREN HERSTELLUNG**
FLATE PLATES AND METHOD FOR THEIR PRODUCTION
PLAQUES PLANES ET PROCÉDÉ POUR LEUR FABRICATION

(30) Priorität: 27.07.2020 DE 102020119771
(43) Veröffentlichungstag der Anmeldung: 07.06.2023
(73) Patentinhaber: Ibotac GmbH & Co. KG, 52249 Eschweiler (DE)
(72) Erfinder: VUJICIC, Bozidar, 52222 Stolberg (DE)
(74) Vertreter: Witthoff Jaekel Steinecke Patentanwälte PartG mbB
(86) Internationale Anmeldenummer: PCT/EP2021/071016
(87) Internationale Veröffentlichungsnummer: WO 2022/023349

(56) Entgegenhaltungen:
- EP-A1- 3 121 004
- WO-A1-2016/001859
- DE-U1- 202013 009 496
- DE-U1- 202016 102 748
- US-A1- 2014 150 842

## Beschreibung

### Technisches Gebiet

Die vorliegende Erfindung betrifft ein Verfahren zur Herstellung von Platten zum Bilden eines großflächigen Bodens, welche aus einer oder mehreren Schichten bestehen und vorzugsweise eine dekorierte Oberfläche aufweisen.

### Hintergrund der Erfindung

Platten zum Bilden von Böden (Bodenbeläge/Bodenplatten) bzw. Wänden oder Decken werden häufig aus thermoplastischem Kunststoff hergestellt, wie Polyvinylchlorid (PVC) oder Polyolefinen (Polypropylen (PP) oder Polyethylen (PE)). Allerdings haben Platten aus homogenen Materialien zahlreiche Nachteile auf. So zeigen solche Platten eine niedrige Thermo- und Dimensionsstabilität auf, wodurch die Platten bei Temperaturwechseln schrumpfen oder wachsen und sich die daraus bestehenden Böden entsprechend verziehen. Werden solche Platten im Spritzgussverfahren hergestellt, so neigen sie dazu zu schüsseln, sich also zu verbiegen, was zu Problemen bei der Verlegung führt und auch die so entstehenden Böden unebenmäßig machen kann. Zudem sind Platten, die weitestgehend nur aus thermoplastischen Kunststoffen und insbesondere nur aus einem bestimmten Materialtyp häufig auch schlecht belastbar und müssen relativ dick sein, um größeren Belastungen standzuhalten.

Einige von diesen Nachteilen versucht man Verwendung mehrschichtiger Platten zu vermeiden, indem z.B. Schichten aus Materialien mit höherer Thermostabilität, Dimensionsstabilität und/oder Steifigkeit eingezogen werden (siehe z.B. EP 3 556 819 A1). Ein Aspekt dabei ist auch der Wunsch, die Oberseite der Platten zu dekorieren, um zum Beispiel dem daraus gefertigten Boden ein bestimmtes Aussehen zu verleihen wozu z.B. nahe der Oberfläche des Bodenbelages eine Schicht z.B. aus Papier (mit schützenden Zusätzen, z.B. imprägniert mit Harz) mit einem Dekor aufgetragen werden, bzw. auf diese Schichten ein Dekor aufgedruckt oder eingepresst wird. EP 3 121 004 A1 beschreibt Polypropylen-basierte, mehrschichtige Bodenplatten, die Glasfasern in einer Trägerschicht enthalten und Verfahren zu deren Herstellung basierend auf Extrusion und Kalandrieren.

Die einzelnen Schichten solcher Platten werden häufig miteinander verklebt oder verpresst. Zahlreiche solcher Verfahren mit ihren Nachteilen sind in der internationalen Patentanmeldung WO 2013/017543 A1 beschrieben, welche zur Verbesserung insbesondere der Wasserfestigkeit dekorierter Mehrschichtplatten ein Verfahren beschreibt, welches die Imprägnierung der oberen Schicht der Platte verlangt. US 2014/0150842 A1 beschreibt Verfahren zur Herstellung von Platten aus glasfaserverstärkten Polymer-Verbundwerkstoffen, wobei das erhitzte Gemisch aus Glasfasern und Polymerbestandteil in eine Form gespritzt wird und darin erkaltet.

Als ein Weg zur Steigerung der Thermostabilität, Dimensionsstabilität, Druckstabilität werden von manchen Herstellern, wie z.B. von Gerflor, Glasfasermatten als eine der Plattenschichten eingesetzt, wobei die anderen Schichten der Platte aus thermoplastischen Kunststoff mit der Glasfasermatte und miteinander verklebt oder verpresst werden, z.B. durch Kalanderwalzenbehandlung (kalandriert). Diese Verfahren sind relativ aufwändig, da alle Schichten zunächst getrennt voneinander hergestellt und genau positioniert werden müssen und da die Platten nach dem Verbinden der Schichten aus dem großen Rohling ausgeschnitten bzw. ausgestanzt werden müssen. Dazu kommt, dass die vorgenannte Glasfasermatte in solchen Platten nur in einer, bzw. im aufwändigeren Fall in mehreren Schichten vorliegt, so dass die festigenden Eigenschaften nicht der gesamten Platte verliehen werden und so z.B. während die Platte insgesamt eine erhöhte Belastbarkeit aufweist die Oberfläche der so hergestellten Platte noch relativ belastungsschwach sein kann.

Wird als Alternative zum Kalandrieren das Spritzgussverfahren zur Herstellung solcher Platten verwendet so kommt als ein weiteres Problem auf, dass die so gebildeten Platten häufig nicht gerade sind, da sie sich beim Abkühlen häufig Verbiegen (Schüsseln), umso mehr, wenn die so erzeugten Platten aus mehreren Schichten bestehen, wo die einzelnen Schichten sich beim Abkühlen unterschiedlich stark zusammenziehen.

Es besteht daher Bedarf an neuen Verfahren zur Herstellung von Platten mittels des Spritzgussverfahrens benötigt, die das Schüsseln der Platten verhindern oder zumindest vermindern, Der Begriff "schüsseln", der bereits oben erwähnt wurde, wird von dem Bild einer Schüssel abgeleitet, welche üblicherweise gebogene Ränder aufweist, während die gewünschten Platten weitestgehend eben sein sollen.

### Kurzbeschreibung der Erfindung

Die vorliegende Erfindung bezieht sich auf die in den Ansprüchen charakterisierten Ausführungsformen.

Allgemein formuliert, bezieht sich die Erfindung auf Verfahren zur Herstellung von Platten. Hierin beschrieben sind sowohl die Platten wie auch Verfahren zu deren Herstellung. Ausgenommen als unmittelbares Verfahrensprodukt, gehören die Platten nicht zur Erfindung. Die nachfolgenden Beschreibungen der Platten an sich dienen daher nur der Illustrierung des erfindungsgemäßen Verfahrens, bzw. sind als bezogen auf die durch erfindungsgemäße Verfahren unmittelbar hergestellten Erzeugnisse zu verstehen. Die Begriffe "erfindungsgemäße(n) Platte(n)" wird hierin daher ausschließlich zur Bezeichnung von Platte(n) unmittelbar hergestellt durch erfindungsgemäße Verfahren verwendet.

Insbesondere bezieht sich die vorliegende Erfindung auf die nachfolgenden Aspekte und Ausführungsformen.

Die vorliegende Erfindung bezieht sich auf ein Verfahren zur Herstellung von Platten umfassend eine Trägerschicht und optional eine Deckschicht umfassend die folgenden Schritte in folgender Reihenfolge:
a) optionales Vorlegen der Deckschicht in einer ersten Form;
b) Erzeugung eines Gemisches umfassend einen thermoplastischen Kunststoff und zerkleinerte Fasern;
c) Erhitzen des Gemisches aus b) unter Mischen bis zum Schmelzen des thermoplastischen Kunststoffs;
d) Hineinspritzen des erhitzten Gemisches in die Form (auf die Rückseite der Deckschicht);
e) Kühlung der Platte in der Form auf eine Temperatur, bei der die Platte stabil genug ist, um aus der Form genommen zu werden;
f) Herausnehmen der Platte aus der Form in eine zweite Form, die eine Biegung aufweist in der Gegenrichtung der zu erwartenden Schüsselung der Platte;
g) Abkühlen der Platte in der Form auf etwa 30°C;
h) Transfer der Platte in eine dritte Form, wobei die dritte Form eine Ebene als Boden aufweist, und die Platte auf diese Ebene gelegt wird; und
i) Herunterkühlen der Platte in der dritten Form 15-20°C unter die Raumtemperatur.

Das erfindungsgemäße Verfahren ist vorzugsweise dadurch gekennzeichnet, dass der thermoplastische Kunststoff ausgewählt wird aus einem Polyolefin und Polyvinylchlorid. Desweiteren sind die zerkleinerten Fasern vorzugsweise gemahlene Glasfasern. Falls eine Deckschicht in der Form vorgelegt wird, besteht diese gemäß dem erfindungsgemäßen Verfahren vorzugsweise aus Polyvinylchlorid (PVC).

Werden neben Fasern und thermoplastischen Kunststoff noch weitere Materialien in dem Verfahren in Schritt b) vermischt und eingesetzt, so umfasst erfindungsgemäß das Gemisch im Schritt b) zusätzlich Holzfasern, Kalkmehl, Steinmehl und/oder Additive.

Gemäß der vorliegenden Erfindung wird das erfindungsgemäße Verfahren wie hierin beschrieben derart durchgeführt, dass das Gemisch:
- im Schritt d) beim Hineinspritzen in die Form eine Temperatur von etwa 150°C-210°C hat;
- im Schritt e) auf etwa 80-110°C in der ersten Form (Spritzgusskammer) heruntergekühlt wird; und
- im Schritt f) mit etwa 80-110°C in die zweite Form gelegt wird.

Vorzugsweise wird gemäß der vorliegenden Erfindung im Schritt d) bei Verwendung von PVC als thermoplastischen Kunststoff eine Temperatur von etwa 170-180°C gewählt, bei PE eine Temperatur von vorzugsweise 180-200°C und bei PP eine Temperatur von 180-210°C gewählt wird.

Vorzugsweise weist die in dem erfindungsgemäßen Verfahren eingesetzte erste Form (Spritzgusskammer) eine Seite mit einer dreidimensionalen Struktur auf, dadurch gekennzeichnet, dass die hergestellte Platte auf ihrer Oberseite, oder falls die Deckschicht in die Form vorgelegt wurde, auf der Oberseite der Deckschicht den Abdruck der dreidimensionalen Struktur nach dem Abschluss des Verfahrens aufweist. Das erfindungsgemäße Verfahren wurde aufgrund der Versuche der Erfinder dermaßen zusammengestellt, dass die hergestellten Platten vorzugsweise dadurch gekennzeichnet sind, dass sie maximal eine Krümmung von 0,5% jedoch nicht mehr als 2 mm bezogen auf die Seitenlänge aufweisen.

Desweiteren ist das erfindungsgemäße Verfahren vorzugsweise dadurch gekennzeichnet, dass die erste Form derart ausgestaltet ist, dass an jeder Seite der Trägerschicht in den hergestellten Platten Verbindungsmittel entstehen, um die Platten mit mindestens einer benachbarten Platte verbinden zu können, wobei die Verbindungsmittel an jeder Seite der Trägerschicht sich gegenüberliegende Fortsätze und Aussparungen sind, wobei die Fortsätze zum formschlüssigen Eingreifen in die Aussparungen bestimmt sind.

Vorzugsweise wird in dem hierin beschriebenen erfindungsgemäßen Verfahren die Deckschicht, falls eingesetzt, derart vorgelegt, dass sie zumindest auf einer Seite der Platte sich vollständig über den Verbindungsmitteln der jeweiligen Platte erstreckt und dass wenn die Platte mit benachbarten Platten über die Verbindungsmittel seitlich miteinander verbunden ist, die Verbindungsmittel an den verbundenen Seiten von der Deckschicht bedeckt sind.

### Beschreibung der Figuren

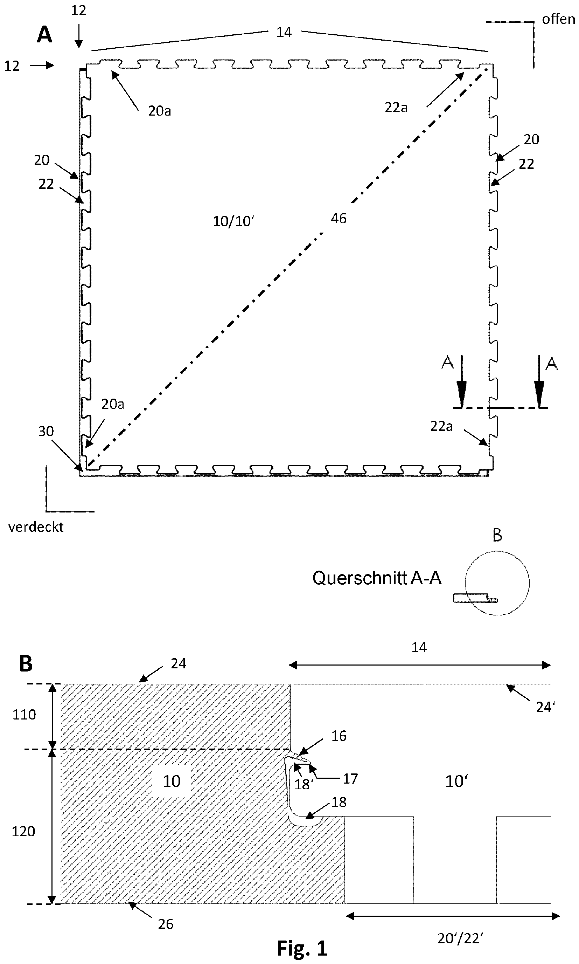

- **Fig. 1:**: **(A)** Aufsicht auf die Rückseite einer beispielhaften erfindungsgemäßen Platte (10) mit überstehenden Oberfläche der Trägerschicht bzw. falls vorhanden Deckschicht. Als Verbindungsmittel (14) sind an den Außenkanten (12) der Platte Verzahnungsreihen mit alternierenden Fortsätzen/Zähnen (20) und passenden Aussparrungen (22) angeordnet. Zwei Außenkanten (oben und rechts) zeigen eine offene Verzahnung und zwei (links und unten) eine verdeckte Verzahnung auf, wobei die Verzahnungen durch einen herausragenden Teil der Plattenoberfläche (30) bzw. der Deckschicht verdeckt sind. **(B)** Querschnitt durch einen Teilbereich der Außenkante der Platte aus (A) in dem mit den Pfeilen A-A gekennzeichneten Bereich der Platte (10) in Verbindung mit einem korrespondierendem Teilbereich der Außenkante einer weiteren Platte (10'). In diesen Teilbereichen befinden sich die Verbindungselemente (14, 14'). Die Dichtlippe (16) der Platte (10) liegt hierbei in der Nut (17). Unterhalb der verbundenen Platte (10') liegt ein Verdrängungskanal (18). Die Nut, so vorhanden, kann derart ausgestaltet sein, dass sie selbst oder Teile davon ebenfalls als ein Verdrängungskanal fungieren (19). Der Plattenteil oberhalb der Dichtlippe wird als Oberseite bzw. falls mehr als eine Schicht vorhanden ist als Deckschicht (110) bezeichnet und kann aus einem anderen Material ausgeführt sein als die Trägerschicht (120) darunter. Die Deckschicht (110) kann auch als mehreren Schichten bestehen.

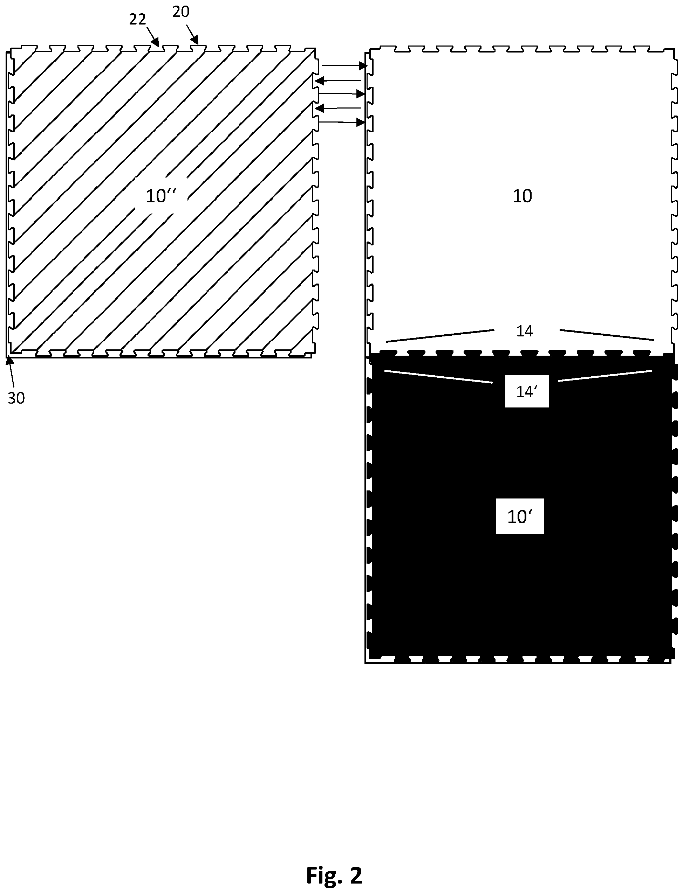

- **Fig. 2:**: Bildung eines Verbundes/Bodenbelags aus den Platten 10, 10' und 10". Platten 10 und 10' sind bereits mittels der Verbindungsmittel (14, 14') miteinander verbunden. Sichtbar sind die hier ineinandergreifenden Verzahnungsreihen. Platte 10" wird noch mit Platte 10 vrbunden, wobei die Fortsätze (20) in die Aussparungen (22) eingreifen werden, wie mit den übereinander angeordneten, wechselseitig ausgerichteten Pfeilen angedeutet wurde.

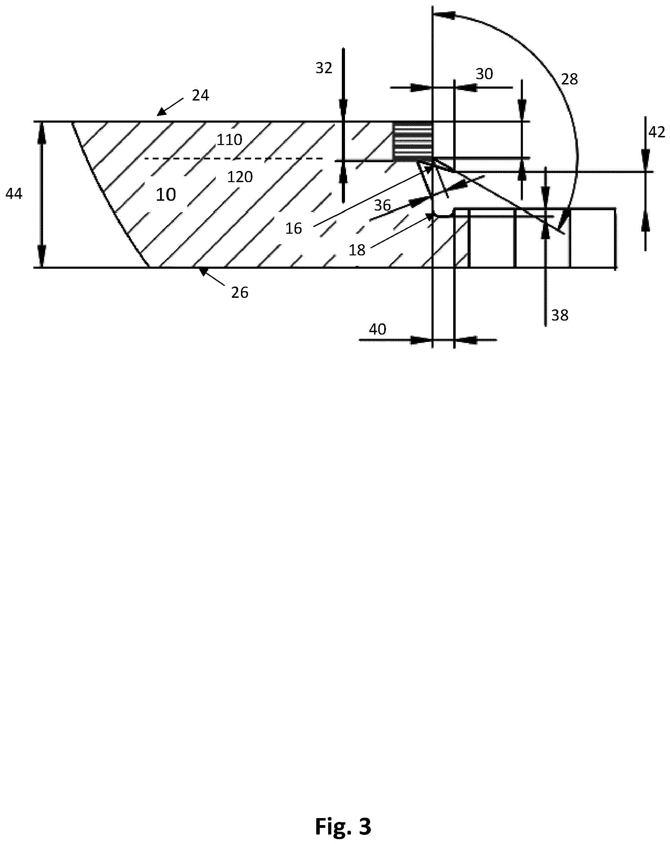

- **Fig. 3:**: Schematischer Querschnitt durch das Verbindungsmittel (14) der Platte (10) aus Fig. 1A und B ohne die ergänzende Platte 10'. Insbesondere soll hier darauf hingewiesen werden, dass die optionale Dichtlippe (16) vorzugsweise unter einem Winkel (28) in Richtung der Plattenunterseite (26) verläuft.

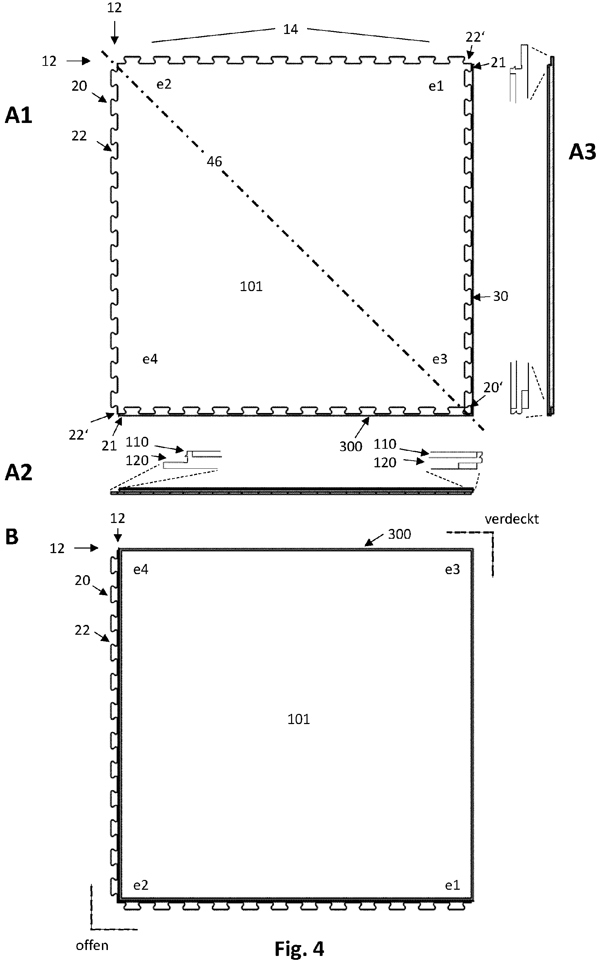

- **Fig. 4:**: **(A1)** Aufsicht auf die Rückseite einer beispielhaften erfindungsgemäßen Platte in quadratischer Ausgestaltung (200). Als Verbindungsmittel sind an den Außenkanten (12) der Platte wie in Fig. 1 Verzahnungsreihen mit alternierenden Fortsätzen/Zähnen (20) und passenden Aussparungen (22) angeordnet. Zwei Außenkanten (oben und links) zeigen eine offene Verzahnung und zwei (rechts und unten) eine verdeckte Verzahnung auf, wobei die Verzahnungen durch einen herausragenden Teil der Plattenoberfläche bzw. durch eine Deckschicht (30) verdeckt sind. Die vier Eckbereiche des Bodenelements (e1-e4) sind hier als Beispiel unterschiedlich gestaltet, aber über die Achse 46 symmetrisch. **(A2)** Querschnitt parallel zur vertikalen Achse der Platte aus (A1). **(A3)** Querschnitt parallel zur horizontalen Achse der Platte aus (A1). Die Gestaltung der Plattenränder ist jeweils in Vergrößerung über den Querschnitten aus A2 und A3 dargestellt. Deckschicht (120) und Trägerschicht (110) sind angedeutet (B) Aufsicht auf die Frontseite einer beispielhaften erfindungsgemäßen Platte in länglicher Ausgestaltung (100) mit der gesamten sichtbaren Oberseite der Deckschicht. Die Fortsätze (20) sind hier, ohne die Anbindung einer weiteren Platte, an den beiden Seiten, die nicht von der Deckschicht überragt werden (offene Verzahnung) noch gut erkennbar.

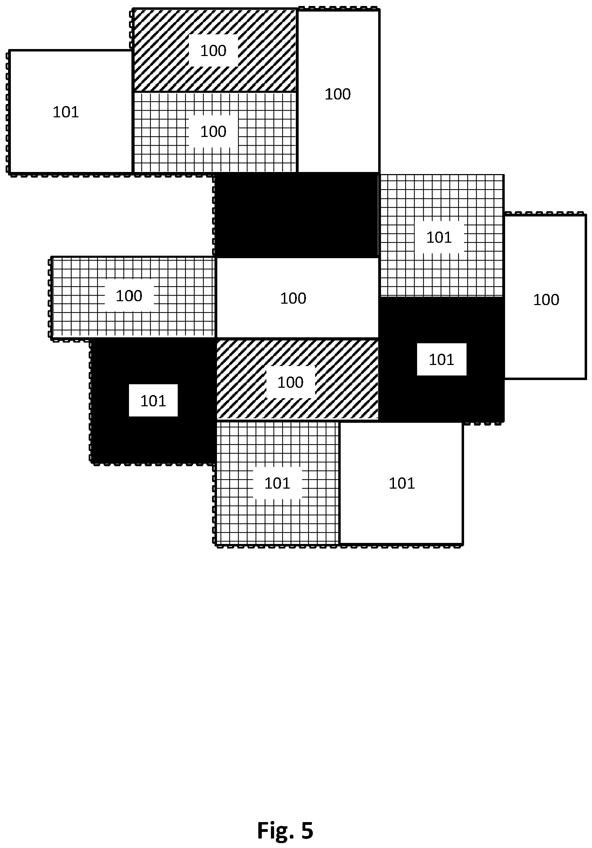

- **Fig. 5**: Beispiel eines Bodenbelags/Verbunds aus länglichen (100) und quadratischen (200) Platten.

### Ausführliche Beschreibung der Erfindung

Die vorliegende Erfindung bezieht sich auf die in den Ansprüchen charakterisierten Ausführungsformen.

Soweit nachfolgend der Kontext nicht eindeutig etwas anderes ergibt, ist bei der Verwendung von Singular-Formen bzw. Plural-Formen stets sowohl die Mehr- als auch die Einzahl umfasst. Der Artikel "ein, eine, eines" bezieht sich dabei nicht nur auf ein Exemplar der jeweiligen durch das nachfolgende Substantiv bezeichnete Objekt, sondern auch auf mehrere hiervon. So steht sich der Begriff "eine/die Platte" wie hierin verwendet stellvertretend eines oder mehrere solcher Platten. Von daher werden im Nachfolgenden im Wesentlichen die Begriffe "ein/eine/eines", "ein/eine/eines oder mehrere", "zumindest/mindestens ein/eine/eines" auch stellvertretend füreinander verwendet.

Der Begriff "etwa/im Wesentlichen" definiert eine mögliche Abweichung von dem nachfolgend genannten Wert(en). Diese Abweichung liegt im Bereich von 1-30%, insbesondere 1-20%, insbesondere 1-10%, insbesondere 1-5% und insbesondere 1-2% von dem Nominalwert des genannten Betrages/Wertes, wie er ohne diesen Betrag definiert wäre.

Die Bezeichnungen Bodenelement, Bodenplatte und Platte werden im Folgenden austauschbar füreinander für eine flächige, bevorzugt rechteckige Vorrichtung benutzt, die zur Herstellung von Böden eingesetzt werden kann. Diese Bezeichnungen beziehen sich auf die bevorzugten Ausführungen der erfindungsgemäßen Vorrichtungen aus der Gesamtmenge aus zusammenfügbaren Mitteln, wobei deren Einsatz zur Herstellung von Böden nur beispielhaft für diese bevorzugten Vorrichtungen dienen soll und gleiche oder ähnliche Elemente, bzw. zusammenfügbare Mittel auch zum Verlegen auf anderen Flächen geeignet sind als Böden, beispielsweise auf Wänden oder Decken. Es versteht sich von daher, dass die Bezeichnung Bodenelement und entsprechende Beschreibung dessen Merkmale weitestgehend nicht auf Elemente zur Herstellung von Böden limitiert ist, sondern kann und soll auch entsprechend die Merkmale anderer Elemente kennzeichnen, wie von Wand- und Deckenverkleidungen. Die Kennzeichnung "gleiche oder ähnliche" bezieht sich hierbei insbesondere auf die Merkmale der Verbindung zwischen den erfindungsgemäßen, zusammenfügbaren Mitteln, wie sie im Nachfolgenden genauer beschrieben werden.

Hierin beschrieben wird eine Platte, welche einen thermoplastischen Kunststoff und gemahlenen Fasern umfasst. Die erfindungsgemäße Platte kann nur aus einer Schicht bestehen, welche im Folgenden auch als Trägerschicht bezeichnet wird und einen thermoplastischen Kunststoff und gemahlene Fasern umfasst oder alternativ aus diesen besteht. Vorzugsweise umfasst die erfindungsgemäße Platte mehr als eine Schicht, wobei zumindest eine der Schichten die genannte und unten genauer bestimmte Mischung aus Kunststoff und gemahlenen Fasern umfasst oder aus dieser Mischung besteht. Besonders bevorzugt umfasst die erfindungsgemäße Platte mindestens zwei Schichten, eine Trägerschicht und eine Deckschicht. Vorzugsweise umfasst dabei zumindest die Trägerschicht die gemahlenen Fasern neben dem thermoplastischen Kunststoff oder besteht aus diesen zwei Materialien. Die Trägerschicht und Deckschicht können auch beide aus der gleichen Mischung aus thermoplastischen Kunststoff und gemahlenen Fasern bestehen. In diesem Fall können die beiden Schichten auch voneinander nicht unterscheidbar sein, bzw. die Deckschicht ist lediglich an einem Dekor zu erkennen. Gemäß der vorliegenden Erfindung kann ein Dekor ausgewählt werden aus der Gruppe bestehend aus einer abweichenden Farbe der Deckschicht in Vergleich zur Trägerschicht, einem Aufdruck auf der Deckschicht, oder, falls die Deckschicht ihrerseits aus mehreren Schichten besteht auf einer dieser Schichten, oder einem dreidimensionalen in die Deckschicht eingeprägten Muster.

Bevorzugt beträgt der Anteil der gemahlenen Fasern in den erfindungsgemäßen Platten beziehungsweise in zumindest einer Schicht der Platten, vorzugsweise der Trägerschicht vorzugsweise zwischen 1 %-35%, weiter bevorzugt 10%-35%, 10%-30%, 10%-25%, 15%-25% oder 15%-20%. Werden Glasfasern als Fasern eingesetzt, so beträgt deren Anteil in zumindest einer Schicht der Platten gemäß der vorliegenden Erfindung vorzugsweise 1%-35%, 10%-35%, 10%-30%, 10%-25%, noch weiter bevorzugt15%-25% und insbesondere bevorzugt 15%-20% Glasfasern, da diese Bereiche als optimal gefunden worden sind, um die gewünschten stabilisierenden Effekte den Platten zu verleihen, ohne dass diese Effekte schwächer werden (unter etwa 10-15%) oder die Platten beginnen spröde zu werden (über 35%). Desweiteren ist der Stabilitätszuwachs am stärksten bei der Verwendung von bis zu 25% Glasfasern, während oberhalb dieses Wertes die Stabilität nur noch schwach ansteigt, während die Kosten der so hergestellten Platten weiterhin stark ansteigen.

Die Fasern sind erfindungsgemäß vorzugsweise im Wesentlichen bzw. weitestgehend gleichmäßig in der jeweiligen Schicht verteilt. Der Begriff "im Wesentlichen/weitestgehend gleichmäßig" wird hierin dahingehend verwendet um zu beschreiben, dass die Fasern über die gesamte Dicke, Breite und Länge der Platte in im Wesentlichen gleichen Mengen verteilt sind und nicht zum Beispiel lediglich auf dem Boden der Schicht zu finden sind.

Die in der vorliegenden Beschreibung verwendeten Prozentangaben bezüglich des Anteiles von bestimmten Materialien in einer Komponente, z.B. in der Trägerschicht oder Deckschicht beziehen sich auf das Gesamtgewicht der jeweiligen Komponente. Bei Platten, die aus einer Schicht bestehen, z.B. nur aus der Trägerschicht, bezieht sich die Prozentangabe auf das Gesamtgewicht der Platte.

Es können unterschiedliche Fasern in den erfindungsgemäßen Platten bzw. in der Trägerschicht der erfindungsgemäßen Platten eingesetzt werden.

Vorzugsweise werden bei den hierin offenbarten Platten die Fasern ausgewählt aus der Gruppe bestehend aus: Glasfasern, Naturfasern und Polyesterfasern. Der Begriff Naturfasern umfasst Pflanzenfasern, Tierfasern und mineralische Naturfasern. Pflanzenfasern werden vorzugsweise ausgewählt aus der Gruppe bestehend aus Baumwolle, Bambusfasern, Hanffasern, Jutefasern, Kenaffasern, Leinenfasern, Brenesselfasern und Kokosfasern. Tierfasern bzw. Fasern tierischen Ursprungs werden vorzugsweise ausgewählt aus Wolle, Rinderhaarm Rosshaar, Ziegenhaar, Schweineborsten und Seide. Mineralische Naturfasern werden vorzugsweise ausgewählt aus der Gruppe bestehend aus Attapulgit (bzw. Palygorskit), Sepiolith und Wollastonit

Besteht die Platte aus mehr als einer Schicht, so kann die Deckschicht, wie schon oben beschrieben auch aus dem gleichen Material wie die Trägerschicht, oder aus einem homogenen Material bestehen oder selbst mehrschichtig sein, also z.B. aus einem Laminat bestehen. Vorzugsweise besteht die Deckschicht aus einem homogenen Material. Besonders bevorzugt ist dabei das homogene Material Polyvinylchlorid (PVC).

Der Begriff "thermoplastische Kunststoffe", wie hierin verwendet bezieht sich auf Kunststoffe, die sich in einem bestimmten Temperaturbereich (thermo-plastisch) verformen lassen. Dieser Vorgang ist reversibel, das heißt, er kann durch Abkühlung und Wiedererwärmung bis in den schmelzflüssigen Zustand beliebig oft wiederholt werden, solange nicht durch Überhitzung die sogenannte thermische Zersetzung des Kunststoffs einsetzt.

Grundsätzlich können die erfindungsgemäßen Platten verschiedene thermoplastische Kunststoffe (gemäß den oben genannten Anteilen, bzw. Mischungsverhältnis mit Fasern) umfassen. Vorzugsweise wird durch die vorliegende Erfindung aber eine Platte wie oben beschrieben bereitgestellt, wobei der thermoplastische Kunststoff ausgewählt wird aus der Gruppe bestehend aus Polyolefinen und Polyvinylchlorid (PVC). Aus der Gruppe der Polyolefine werden gemäß der vorliegenden Erfindung vorzugsweise Polyethylen (PE) oder Polypropylen (PP) verwendet. Vorzugsweise umfasst also die erfindungsgemäße Platte also in der Trägerschicht wahlweise PVC, PE oder PP als thermoplastischen Kunststoff. Bezogen auf das PVC wird gemäß der vorliegenden Erfindung, sowohl bezogen auf die Platten wie auch auf das weiter unten vorgestellte erfindungsgemäße Verfahren, vorzugsweise ein PVC mit einer Dichte von etwa 1,3 bis 1,45 g/cm³ und einem Shore A Wert von etwa 85-95 verwendet. Vorzugsweise wird in den Platten und in dem Verfahren gemäß der vorliegenden Erfindung ein PVC mit einem K-Wert von 50 oder 70 verwendet.

Die ersten Tests der Eigenschaften von Platten die erfindungsgemäß eine Beimischung von Glasfasern enthielten, die von den Erfindern durchgeführt worden sind zeigten, dass durch die Beimischung von Fasern in den genannten Anteilen in die Trägerschicht der Platten, zahlreiche Eigenschaften der Platten verbessert waren gegenüber Platten, deren Trägerschicht nur aus thermoplastischen Kunststoffen bestanden, bzw. in denen keine gemahlenen Fasern vorlagen. So zeigten Platten ohne Faserbeimischung bei Erhitzung auf 95-100°C eine Ausdehnung von 1,2-1,6 %, während die erfindungsgemäßen Platten eine Ausdehnung von nur 0,12-0,16 % aufwiesen, also eine Thermostabilität, die um den Faktor 10 niedriger lag. Ebenso lag der Schrumpf (Maßänderung) der Plattendimensionen bei 25-35°C bei erfindungsgemäßen Platten mit Faserbeimischung bei nur 0,01-0,02 %, während er bei Platten nur aus thermoplastischen Kunststoff bei 1,2-1,6 % lag. Desweiteren lag die Punktlast, die die erfindungsgemäßen Platten tragen konnten mit 65-70 kg/cm² wesentlich höher als bei Platten ohne Glasfaserbeimischung mit 30-35 kg/cm² bei Raumtemperatur (22-25°C) (siehe Beispiel 3). Hierbei zeigte sich auch, dass die erfindungsgemäßen Platten viel dünner hergestellt werden können, als Platten die aus thermoplastischen Kunststoff bestehen, da während die herkömmliche Platte um die obengenannte Drucklast von 30-35 kg/cm² tragen zu können 10 mm dick sein musste, erreichten die erfindungsgemäßen Platten die genannte Drucklast von 65-70 kg/cm² bereits bei 6,5 mm dicke. Eine weitere vorteilhafte Eigenschaft der erfindungsgemäßen Platten ist, dass diese bezüglich ihres Brandverhaltens als schwerentflammbare Bodenbelege eingestuft worden sind, wie genauer in Beispiel 2 beschrieben ist.

Die Trägerschicht oder Platte kann neben thermoplastischen Kunststoff und Fasern in oben genannten Anteil auch andere Materialien umfassen. Vorzugsweise werden ein oder mehrere solcher weiteren Materialien ausgewählt aus der Gruppe bestehend aus Holz, vorzugsweise Holzmehl, Kalkmehl, Steinmehl und Additiven. Anstatt Holzmehl können auch andere Pflanzenfasern eingesetzt werden. Vorzugsweise werden diese alternativen Pflanzenfasern ausgewählt aus der Gruppe bestehend aus Kenaf, Jute oder Flachs. Vorzugsweise ändert sich durch Verwendung dieser zusätzlichen Materialien nicht der obengenannte Anteil der Fasern in der Trägerschicht oder Platte, sondern der Anteil des thermoplastischen Kunststoffs wird entsprechend vermindert. Falls eines oder mehrere der zusätzlichen Materialien ausgewählt aus der Gruppe bestehend aus Holz, vorzugsweise Holzmehl, Kalkmehl und Steinmehl verwendet werden so beträgt erfindungsgemäß deren Anteil im thermoplastischen Kunststoff der Trägerschicht zwischen etwa 10 und etwa 90%, vorzugsweise zwischen etwa 20-90%, 20-80%, 20-70%, 20-60%, 20-50%, 30-50%, 35-50%, 40-50%, 50-60% oder bei etwa 50%.

Unter Additiven werden Substanzen verstanden, die z.B. die verwendeten Kunststoffe vor thermo-oxidativen Zersetzung, Säurefänger ("acid scavenger", wie Hydrotalkit/Hydrotalcit bzw. DHT-4A) Antioxidantien, Färbemittel/Farbpigmente, Flammschutzmittel, Biozide, Weichmacher. Der Gesamtanteil an Additiven in der Trägerschicht liegt vorzugsweise bei etwa 0,1-5%, weiter bevorzugt bei etwa 0,1-2%, insbesondere bevorzugt bei etwa 0,5-1,0%. Als Weichmacher werden gemäß der vorliegenden Erfindung vorzugweise Bis(2-ethylhexyl)terephthalat (DOTP, insbesondere DOTP 40) oder Diisononylphthalat (DINP) verwendet.

Die zusätzlichen Materialien liegen vorzugsweise entweder vermischt mit dem thermoplastischen Kunststoff und den Fasern in der Trägerschicht oder ggf. in der Platte vor, oder sie liegen in Schichten vor, wobei die Trägerschicht dann aus einer oder mehreren Schichten besteht, die nur den thermoplastischen Kunststoff und die Fasern in den genannten Anteilen enthält und aus einer oder mehreren Schichten, die thermoplastischen Kunststoff und eines oder mehrere der zusätzlichen Materialien oder aus einer oder mehreren Schichten, die thermoplastischen Kunststoff, eines oder mehrere der zusätzlichen Materialien und gemahlene Fasern in den oben genannten Anteilen umfassen.

Alternativ oder zusätzlich liegt also der thermoplastische Kunststoff in der Trägerschicht in einem Verbundwerkstoff vor. Der Verbundwerkstoff wird erfindungsgemäß vorzugsweise ausgewählt aus der Gruppe bestehend aus Laminaten, Holz(faser)-Polymer-Verbundwerkstoffen (Wood-Plastic-Composits (WPCs)) und Steinpolymer-Verbundwerkstoffen (Stone-Plastic-Composits (SPCs)). WPCs umfassen einen thermoplastischen Kunststoff, wie hier definiert und Holz bzw. Holzmehl oder Pflanzenfasermehl in den obengenannten Anteilen, während SPCs erfindungsgemäß einen thermoplastischen Kunststoff und Stein oder Kalkmehl in den obengenannten Anteilen enthalten. Der Begriff WPC oder SPC wie hierin verwendet bezieht sich vorzugsweise nur auf die Schicht, die ein Kunststoff/Holz(faser) bzw. Kunststoff/Kalkmehl oder Kunststoff/Steinmehl als Verbundwerkstoff umfasst.

Die erfindungsgemäßen Platten oder eine bzw. mehrere Schichten der Platten enthalten erfindungsgemäß gemahlene Fasern. Vorzugsweise weisen die gemahlenen Fasern dabei eine Länge von 0,1-6 mm auf, weiter bevorzugt 1-6 mm, 1,5-5,5mm, 2-5 mm, 2-4,5mm, 2-4 mm, 2-3,5 mm und besonders bevorzugt 2-3 mm.

Vorzugsweise sind die erfindungsgemäßen Platten derart ausgestaltet, dass sie miteinander verbunden werden können, um einen großflächigen Belag, z.B. einen Bodenbelag zu bilden, falls die zu bedeckende Fläche größer ist als die Abmessungen der einzelnen Platte. Entsprechend werden hiermit Platten bereitgestellt, wobei die einzelne Platte vorzugsweise Verbindungsmittel an jeder Seite der Platte bzw. der Trägerschicht aufweist, um die Platte mit mindestens einer benachbarten, vorzugsweise gleichartigen Platte verbinden zu können.

Die an den erfindungsgemäßen Platten eingesetzten Verbindungsmittel können vielfacher Natur sein. Unter geeignete Verbindungsmittel fallen hierbei beispielsweise mechanische, chemische und physikalische Mittel. Unter mechanischen Verbindungsmitteln, die an mindestens einer Außenkante der erfindungsgemäßen Platten ausgestaltet oder angebracht werden können, werden insbesondere Ausgestaltungen der Außenkante verstanden, die dazu geeignet sind mit dazu korrespondierenden, ergänzenden Ausgestaltungen auf einer Außenkante einer anderen Platte eine formschlüssige Verbindung einzugehen. Vorzugsweise werden als derartige Verbindungsmittel Verzahnungssysteme eingesetzt. Unter Verzahnungssystemen werden gemäß der vorliegenden Erfindung im Allgemeinen Bereiche aus Ausstülpungen und Einstülpungen verstanden, also aus hinausragenden Bereichen, welche hierin auch als Ausbuchtungen oder Verzahnungen bezeichnet werden, wobei diese Begriffe hierin füreinander austauschbar verwendet werden; und eingezogenen Bereichen (Einbuchtungen, bzw. Aussparungen - wobei beide Begriffe hierin austauschbar verwendet werden), wobei die Ausstülpungen und Einstülpungen jeweils so gestaltet sind, dass die Ausbuchtungen in die Einbuchtungen weitestgehend formschlüssig eindringen und diese Ausfüllen können. Vorzugsweise sind die Aus- und Einbuchtungen dabei alternierend entlang der Außenkante angeordnet. Dabei sind die Ausbuchtungen vorzugsweise so gestaltet, dass am Ende deren stielförmig herausragenden Bereichs Bereiche mit einer größeren seitlichen Ausdehnung, sich also im Wesentlichen parallel zu der Außenkante ausdehnende Bereiche anschließen. Durch eine solche Gestaltung können die Ausbuchtungen vorzugsweise nicht in die Einbuchtungen eindringen, oder aus diesen herausgenommen werden, wenn sich beide in gleicher Ebene befinden. Vielmehr müssen diese senkrecht zur der Ebene der Verbindung ineinander eingesetzt oder entnommen werden, da durch das Ineinandergreifen der Ausbuchtungen der einen Platte in die Einbuchtungen der anderen Platte, beide Platten horizontal arretiert werden. Solche gemäß der vorliegenden Erfindung bevorzugten Verbindungen sind im Allgemeinen auch als Puzzle-, Knopfloch- oder auch Schwalbenschwanzverbindungen bekannt.

Daher werden die erfindungsgemäße Platte bzw. Bodenelement vorzugsweise derart bereitgestellt, dass als Verbindungsmittel an mindestens einem Rand bzw. einer Außenkante der Platte Verzahnungen für eine formschlüssige Verbindung mit einem weiteren, insbesondere gleichartigen, Bodenelement bzw. Platte vorgesehen sind. Wie oben dargelegt, sind die erfindungsgemäßen Platten dabei vorzugsweise derart ausgestaltet, dass die Verzahnungen aus Fortsätzen und Aussparungen ausgebildet sind, wobei die Fortsätze zum formschlüssigen Eingreifen in die Aussparungen auf einer anderen (gegenüberliegenden) Platte bestimmt sind.

Die Verzahnungen, über die die erfindungsgemäße Platte verfügt können nach zusammenfügen von Platten in dem Verbindungsbereich zwischen diesen offen sichtbar sein, also offen vorlegen, oder nicht sichtbar sein, also verdeckt vorliegen. Es kann auch ein gemischtes Auftreten von sichtbaren und verdeckten Verzahnungen gewählt werden. Hierzu wird die erfindungsgemäße Platte bevorzugt derart bereitgestellt, dass die Verzahnungen, insbesondere die Fortsätze und Aussparungen auf zumindest einer Außenkante der Platte offen aus dieser herausragen, und/oder verdeckt vorliegen. Sollen die Verzahnungen zumindest an einer Außenkante verdeckt vorliegen, werden die erfindungsgemäßen Platte derart ausgestaltet, dass die Plattenoberfläche, bzw. die Deckschicht, soweit eine solche vorhanden ist, zumindest an dieser Außenseite über der Verzahnung liegt und diese überdeckt. Auf der korrespondierenden Seite einer weiteren erfindungsgemäßen Platte wird die gleiche Ausführungsform gewählt. Hierdurch wird dann erreicht, dass nachdem die beiden Platten miteinander verbunden sind, die Plattenoberflächen aneinanderstoßen und so die darunterliegenden, miteinander verbundenen Verzahnungen beider Platten verdecken.

Um die Platten besser miteinander zu verbinden und insbesondere auch um einen Verbund aus mehreren erfindungsgemäßen Platten möglichst flüssigkeitsdicht zu gestalten ist es häufig notwendig die Platten zusätzlich zu dem Verzahnungssystem auch mittels eines Klebers miteinander zu verbinden. Hierbei tritt häufig überschüssiger Klebstoff zwischen den Platten auf, der vorzugsweise daran gehindert wird, aus dem Grenzbereich zwischen der Platten auf die Oberfläche der Platten herauszutreten, da dadurch eine enorme Steigerung der Verlegungseffizienz erreicht werden kann.

Als besonders geeignete Mittel hierzu haben sich die Kombination aus einer Dichtlippe und einem oder ggf. mehrere Verdrängungskanäle herausgestellt, die einzeln oder vorzugsweise in Kombination dazu geeignet sind, den überschüssigem Kleber am Heraustreten aus dem Verbindungsbereich zwischen den Platten entweder zu hindern (Dichtlippe-Nut) und/oder Ausweichorte (Verdrängungskanal) zu bieten, an die der Kleber durch den Druck der aneinandergelegten Platten verdrängt werden kann. Hierdurch wird der bei Verlegung von Bodenbelägen häufig auftretende hydropneumatische Effekt verhindert oder zumindest vermindert, der die verlegten Platten punktuell nach oben treibt und somit den verlegten Boden uneben und gegebenenfalls auch undicht gegenüber Flüssigkeiten macht. Vorzugsweise enthalten also die erfindungsgemäßen Platten an den Seiten mit den Verzahnungselementen Kombinationen aus Dichtlippen und Verdrängungskanälen. Besonders bevorzugt werden die Dichtlippen und Verdrängungskanäle dabei so gestaltet, wie in der internationalen Patentanmeldung WO 2017/202486 A1 derselben Anmelderin auf Seiten 14, Zeile 26 bis Seite 16, Zeile 25, beschrieben und gezeigt in Figuren 1 und 3 (dort und hier).

Die Verzahnungen und Eckbereiche der erfindungsgemäßen Platten werden vorzugsweise ebenfalls derart gestaltet wie in der WO 2017/202486 A1 beschrieben, insbesondere die entsprechend der Anordnung der Verzahnungen wie dort beschrieben auf Seite 17, Zeile 18 bis Seite 19, Zeile 9, sowie vorzugsweise die Eckbereiche gestaltet wie dort beschrieben auf Seite 19, Zeile 11 bis Seite 20, Zeile 8, Seite 21, Zeile 18 bis Seite 23, Zeile 3 und wie dort gezeigt in Fig. 7.

Hierin beschrieben ist daher eine Platte bei welcher an zumindest einer Außenkante mindestens ein Verbindungsmittel zum Verbinden der Platte mit einer weiteren, insbesondere gleichartigen, Platte vorgesehen ist wie oben beschrieben, dadurch gekennzeichnet, dass das Verbindungsmittel
(i) eine Dichtlippe aufweist, die sich formschlüssig in eine Negativform (Nut) des Verbindungsmittel einfügt, das an zumindest einer Außenkante an der weiteren, insbesondere gleichartigen, Platte vorhanden ist; und
(ii) vorzugsweise einen Verdrängungskanal, der im Falle der formschlüssigen Verbindung der beiden Platten geeignet ist, ggf. überschüssiges Fugenmaterial aufzunehmen.

Wie oben gesagt, können bei den erfindungsgemäßen Platten die Verbindungsmittel offen vorliegen, d.h. bei einer einzelnen Platte zu allen Seiten hin sichtbar sein, oder diese können auf einer oder mehreren Seiten (bzw. Rändern) der erfindungsgemäßen Platte verdeckt sein, durch die Plattenoberseite. Vorzugsweise sind die hiermit bereitgestellten Platten derart gestaltet, dass die Oberseite, bzw. soweit vorhanden die Deckschicht der Platte zumindest auf einer Seite der Platte sich vollständig über den Verbindungsmitteln der jeweiligen Platte erstreckt und wobei, wenn die Platte mit einer benachbarten Platten über die Verbindungsmittel seitlich miteinander verbunden ist, die Verbindungsmittel an den verbundenen Seiten bedeckt sind. Vorzugsweise wird die Bedeckung dabei von der Deckschicht erreicht, soweit eine solche vorhanden ist. Ist die Platte einschichtig, so wird der obere Bereich der Platte derart gestaltet, dass er über die Verbindungsmittel hinausragt.

Vorzugsweise ist die durch die vorliegende Erfindung bereitgestellte und hier beschriebene Platte dadurch gekennzeichnet, dass die Trägerschicht im Spritzgussverfahren auf eine in einer Form vorliegende Deckschicht aufgetragen wird. Dieses wird weiter unten noch genauer beschrieben. Kurz dargestellt wird diese bevorzugte Gestaltung dadurch erreicht, dass die Deckschicht zunächst gesondert gefertigt wird oder auch wahlweise bereits gefertigt erworben wird und diese Deckschicht dann in eine Form vorgelegt wird, in welcher mittels Spritzgussverfahren die Platte fertiggestellt werden kann, indem eine erhitzte Mischung aus einem thermoplastischen Kunststoff und gemahlenen Fasern, wie hierin beschrieben, auf die Deckschicht aufgespritzt wird. Besonders bevorzugt werden als Deckschicht vorgefertigte Schichten verwendet, die der letztlich erzeugten Platte das gewünschte Dekor verleihen. Vorzugsweise können hierzu PVC-Platten oder Laminate mit einem Dekor eingesetzt werden. Das Dekor kann aber auch während des Spritzgussverfahrens aufgeprägt werden, indem z.B. die Seite der Form, die zur Deckschicht hinweist (oder eine hineingelegte Zwischenwand) Ausbuchtungen und Vertiefungen aufweist (geprägt ist), die wenn das erhitzte Gemisch aus thermoplastischen Kunststoff und gemahlenen Fasern in die Form hinter die Deckschicht unter Druck gespritzt werden, die Deckschicht erhitzen und gegen die Prägung auf der Form drücken, wodurch sich die Prägung als dreidimensionales Muster auf die Deckschicht überträgt, bzw. in diese hineingedrückt wird. Vorzugsweise kann die Form dabei ein Baumrindmuster aufgeprägt haben.

In den Versuchen, die zu der Auswahl der Materialien zur Herstellung der erfindungsgemäßen Platten beigetragen haben, haben die Erfinder festgestellt, dass bei der Verwendung von nur thermoplastischen Kunststoffen die im Spritzgussverfahren hergestellten Platten häufig gekrümmt sind und dabei eine Krümmung von über 0,5% und auch mehr als um 2 mm bezogen auf die Seitenlänge aufweisen. Großflächige Verbünde aus solchen Platten sind uneben, was zum einen ästhetisch nicht ansprechend ist, aber auch eine Stolpergefahr darstellt sowie die Verbindung von mehreren Platten erschwert und diese Verbindung auch schwächt. Insbesondere auch durch die Beimischung von Fasern in den hier beschriebenen Mengen und die Gestaltung der Platte wie hier beschrieben konnte die Dimensionsstabilität der erfindungsgemäßen Platten erhöht und die Krümmung unter die genannten Werte gedrückt werden. Von daher sind gemäß der vorliegenden Erfindung hergestellten und hier beschriebenen Platten dadurch gekennzeichnet, dass die Platte(n) eben ist bzw. sind und maximal eine Krümmung von 0,5% jedoch nicht mehr als 2 mm bezogen auf ihre Seitenlänge aufweist (entsprechend der Norm EN 14411).

Die Unterseite der erfindungsgemäßen Platten kann glatt sein, sie kann aber auch dreidimensionale Strukturen aufweisen. Vorzugsweise ist die Unterseite der erfindungsgemäßen Platten dadurch gekennzeichnet, dass sie Noppen und oder Kanäle aufweist. Durch eine solche Gestaltung liegen die erfindungsgemäßen Platten nicht ganzflächig auf dem darunterliegenden Untergrund, z.B. auf einem Boden. Dies hat den Vorteil, dass Flüssigkeiten, die unter die Platten geraten, nicht darunter stauen und somit zur Verschmutzung oder auch Geruchsbildung, z.B. durch Wachstum von Bakterien und/oder Schimmelpilzen führen, sondern, dass die Flüssigkeiten zumindest teilweise abfließen können, wodurch die benannten negativen Effekte reduziert oder auch ganz vermieden werden können.

Die erfindungsgemäßen Platten können zahlreichen Zwecken und Anwendungen hinzugeführt werden. Vorzugsweise wird gemäß der vorliegenden Erfindung eine Platte wie hierin beschrieben bereitgestellt, wobei es sich bei der Platte um eine Bodenplatte, ein Wandpaneel oder eine Deckenplatte handelt.

Die vorliegende Erfindung betrifft ein Verfahren zur Herstellung von Platten umfassend eine Trägerschicht, welches Verfahren die folgenden Schritte in folgender Reihenfolge umfasst:
b) Erzeugung eines Gemisches umfassend oder bestehend aus einen thermoplastischen Kunststoff und zerkleinerte Fasern;
c) Erhitzen des Gemisches aus b) unter Mischen bis zum Schmelzen des thermoplastischen Kunststoffs;
d) Hineinspritzen des erhitzten Gemisches in die Form;
e) Kühlung der Platte in der Form auf eine Temperatur, bei der die Platte stabil genug ist, um aus der Form genommen zu werden;
f) Herausnehmen der Platte aus der Form in eine zweite Form, die eine Biegung aufweist in der Gegenrichtung der zu erwartenden Schüsselung der Platte;
g) Abkühlen der Platte in der Form auf etwa 30°C;
h) Transfer der Platte in eine dritte Form, wobei die dritte Form eine Ebene als Boden aufweist, und die Platte auf diese Ebene gelegt wird; und
i) Herunterkühlen der Platte in der dritten Form 15-20°C unter die Raumtemperatur.

Vorzugsweise bezieht sich das erfindungsgemäße Verfahren auf die Herstellung von Platten, die mindestens zwei Schichten umfassen, wobei hergestellten Platten neben der Trägerschicht eine Deckschicht umfassen. Hierzu wird erfindungsgemäß vor dem Schritt b) ein weiterer Schritt (Schritt a)) durchgeführt, in welchem eine Deckschicht in die erste Form vorgelegt wird, bevor das Gemisch umfassend oder bestehend aus thermoplastischen Kunststoff mit zerkleinerten Fasern erzeugt (in Schritt b)), bis zum Schmelzen des thermoplastischen Kunststoffs erhitzt (Schritt c)) und in die Form hineingespritzt wird (Schritt d). Die Deckschicht wird dabei vorzugsweise mit der künftigen Oberseite hin zu der Wand in die Form eingelegt, die gegenüber der Öffnung liegt, durch welche das erhitzte Gemisch wie oben definiert in die Form hineingespritzt wird, so dass das erhitzte Gemisch somit auf die Rückseite der Deckschicht eingespritzt wird.

In dieser bevorzugten Ausführungsform wird somit das erfindungsgemäße Verfahren zur Herstellung von Platten umfassend eine Trägerschicht und eine Deckschicht bereitgestellt, wobei das Verfahren die folgenden Schritte in folgender Reihenfolge umfasst:
a) Vorlegen der Deckschicht in einer ersten Form;
b) Erzeugung eines Gemisches umfassend oder bestehend aus einen thermoplastischen Kunststoff und zerkleinerte Fasern;
c) Erhitzen des Gemisches aus b) unter Mischen bis zum Schmelzen des thermoplastischen Kunststoffs;
d) Hineinspritzen des erhitzten Gemisches in die Form auf die Rückseite der Deckschicht;
e) Kühlung der Platte in der Form auf eine Temperatur, bei der die Platte stabil genug ist, um aus der Form genommen zu werden;
f) Herausnehmen der Platte aus der Form in eine zweite Form, die eine Biegung aufweist in der Gegenrichtung der zu erwartenden Schüsselung der Platte;
g) Abkühlen der Platte in der Form auf etwa 30°C;
h) Transfer der Platte in eine dritte Form, wobei die dritte Form eine Ebene als Boden aufweist, und die Platte auf diese Ebene gelegt wird; und
i) Herunterkühlen der Platte in der dritten Form 15-20°C unter die Raumtemperatur.

Gemäß der vorliegenden Erfindung wird das erhitzte Gemisch im Schritt d) des hiermit bereitgestellten Verfahrens vorzugsweise unter einem Druck von etwa 4000-10.000 Bar in die Spritzgussform gespritzt, weiter bevorzugt unter einem Druck von etwa 4000-7000 Bar, insbesondere bevorzugt unter einem Druck von etwa 5000-6000 Bar.

Vorzugsweise wird in einem, mehreren oder in allen Schritten e) bis i) des erfindungsgemäßen Verfahrens ebenfalls Druck auf die in Herstellung befindliche Platte in der jeweiligen Form ausgeübt. Bevorzugt liegt dieser Druck in diesen Schritten des erfindungsgemäßen Verfahrens bei etwa 5-500 Bar.

Der in dem erfindungsgemäßen Verfahren einzusetzende thermoplastischen Kunststoff, Fasern und gegebenenfalls auch weitere Materialien werden ausgewählt und in den gleichen Anteilen verwendet, wie bereits oben für die erfindungsgemäßen Platten beschrieben.

Somit beträgt der Anteil der gemahlenen Fasern in dem Gemisch in Schritt b) des erfindungsgemäßen Verfahrens vorzugsweise zwischen 1%-35%, weiter bevorzugt 10%-35%, 10%-30%, 10%-25%, 15%-25% oder 15%-20%. Werden Glasfasern als Fasern eingesetzt, so beträgt deren Anteil in dem Gemisch in Schritt b) des Verfahrens gemäß der vorliegenden Erfindung vorzugsweise 1%-35%, 10%-35%, 10%-30%, 10%-25%, noch weiter bevorzugt15%-25% und insbesondere bevorzugt 15%-20% Glasfasern, da diese Bereiche als optimal gefunden worden sind, um die gewünschten stabilisierenden Effekte den Platten zu verleihen, ohne dass dieser Effekt schwächer wird (unter etwa 10-15%) oder die Platten beginnen spröde zu werden (über 35%). Der Rest des Gemischs wird durch den thermoplastischen Kunststoff gebildet, vorzugsweise ausgewählt aus Polyolefinen und PVC, wobei unter den Polyolefinen vorzugsweise PE oder PP eingesetzt wird und ggf. aus weiteren Materialien, wie ebenfalls bezüglich möglicher weiterer Materialien und deren Anteile oben in Bezug auf die erfindungsgemäßen Platten und hierunter auch für das Verfahren detailliert beschrieben.

Gemäß der vorliegenden Erfindung liegen bei der Erzeugung des Gemisches in Schritt b) sowohl der thermoplastische Kunststoff wie die Fasern kleinteilig vor, die Fasern vorzugsweise gemahlen, wobei die zerkleinerten bzw. gemahlenen Fasern dabei eine Länge von 0,1-6 mm auf, weiter bevorzugt 1-6 mm, 1,5-5,5mm, 2-5 mm, 2-4,5mm, 2-4 mm, 2-3,5 mm und besonders bevorzugt 2-3 mm aufweisen, und der thermoplastische Kunststoff vorzugsweise als Granulat vorliegt. Gemäß dem erfindungsgemäßen Verfahren werden die Fasern aus denselben Materialien ausgewählt, wie bereits oben für die erfindungsgemäßen Platten beschrieben, d.h. dass die Fasern vorzugsweise ausgewählt werden aus der Gruppe bestehend aus: Glasfasern, Naturfasern und Polyesterfasern. Der Begriff Naturfasern wie hierin verwendet bezieht sich auf Pflanzenfasern, Tierfasern und mineralische Naturfasern. Pflanzenfasern werden gemäß der vorliegenden Erfindung vorzugsweise ausgewählt aus der Gruppe bestehend aus Baumwolle, Bambusfasern, Hanffasern, Jutefasern, Kenaffasern, Leinenfasern, Brenesselfasern und Kokosfasern . Tierfasern bzw. Fasern tierischen Ursprungs werden vorzugsweise ausgewählt aus Wolle, Rinderhaarm Rosshaar, Ziegenhaar, Schweineborsten und Seide. Mineralische Naturfasern werden vorzugsweise ausgewählt aus der Gruppe bestehend aus Attapulgit (bzw. Palygorskit), Sepiolith und Wollastonit. Besonders bevorzugt werden in dem erfindungsgemäßen Verfahren gemahlene Glasfasern eingesetzt.

Wie schon erwähnt, können gemäß der vorliegenden Erfindung neben dem thermoplastischen Kunststoff und Fasern auch weitere Materialien in dem Gemisch in Schritt b) vorliegen. Diese weiteren Materialien werden vorzugsweise gewählt aus der Gruppe bestehend aus Holz, vorzugsweise Holzmehl, Kalkmehl, Steinmehl und Additiven. Anstatt Holzmehl können auch andere Pflanzenfasern eingesetzt werden. Vorzugsweise werden diese alternativen Pflanzenfasern ausgewählt aus der Gruppe bestehend aus Kenaf, Jute oder Flachs. Vorzugsweise ändert sich durch Verwendung dieser zusätzlichen Materialien nicht der obengenannte Anteil der Fasern in dem Gemisch, sondern der Anteil des thermoplastischen Kunststoffs wird entsprechend vermindert. Falls eines oder mehrere der zusätzlichen Materialien ausgewählt aus der Gruppe bestehend aus Holz, vorzugsweise Holzmehl, Kalkmehl und Steinmehl verwendet werden so beträgt erfindungsgemäß deren Anteil bezogen auf den Anteil des thermoplastischen Kunststoffs in dem Gemisch erzeugt im Schritt b) des erfindungsgemäßen Verfahrens zwischen etwa 10 und etwa 90%, vorzugsweise zwischen etwa 20-90%, 20-80%, 20-70%, 20-60%, 20-50%, 30-50%, 35-50%, 40-50%, 50-60% oder etwa 50%.

Unter Additiven werden hierin Substanzen verstanden, die z.B. die verwendeten Kunststoffe vor thermo-oxidativen Zersetzung, Säurefänger ("acid scavenger", wie Hydrotalkit/Hydrotalcit bzw. DHT-4A) Antioxidantien, Färbemittel/Farbpigmente, Flammschutzmittel, Biozide. Der Gesamtanteil an Additiven in dem Gemisch aus Schritt b) des erfindungsgemäßen Verfahrens liegt vorzugsweise bei etwa 0,1-5%, weiter bevorzugt bei etwa 0,1-2%, insbesondere bevorzugt bei etwa 0,5-1,0%.

Vorzugsweise werden als zusätzliche Materialien gemäß dem erfindungsgemäßen Verfahren Holzmehl, Kalkmehl, Steinmehl und/oder Additive dem Gemisch im Schritt b) zugefügt.

Das erhitzte und somit dann flüssige Gemisch wird in Schritt d) des erfindungsgemäßen Verfahrens unter Druck in die Form bzw. Spritzgussform auf die Rückseite der Deckschicht gespritzt. Vorzugsweise liegt der Druck dabei bei 4.000 bis 10.000 Bar.

Um der Schüsselung entgegenzuwirken und diese soweit wie möglich zu vermeiden wird gemäß dem erfindungsgemäßen Verfahren unter anderem Schritt f) durchgeführt, in welchem die Platte aus der Form, in der sie hergestellt worden ist herausgenommen und in eine zweite Form hineingelegt wird, welche eine Biegung aufweist in der Gegenrichtung der zu erwartenden Schüsselung der Platte. Alleine schon durch das Ruhen auf dieser Biegung wird die Schüsselung durch das Eigengewicht der Platten vermindert. Vorzugweise, wird, um die Schüsselung noch weiter zu vermindern in diesem Schritt zusätzlich Druck auf die Platte ausgeübt, so dass diese über die Gegenbiegung wieder ebener wird. Dieser Schritt in Kombination mit den nachfolgenden Schritten g.), h.) und i.) des erfindungsgenäßen Verfahrens führt letztendlich dazu, dass die mittels des Verfahrens hergestellten Platten weitestgehend eben sind, d.h. eine Krümmung von höchstens 0,5% jedoch nicht mehr als 2 mm bezogen auf ihre Seitenlänge aufweisen, während Platten bei denen einer oder mehrere dieser Schritte unterbleiben eine höhere Krümmung nach der Herstellung aufweisen.

Gemäß dem erfindungsgemäßen Verfahren wird der thermoplastische Kunststoff vorzugsweise ausgewählt aus Polyolefinen und Polyvinylchlorid. Die Deckschicht besteht dabei aus einem aus: Polyvinylchlorid (PVC).

Werden im Schritt b) des erfindungsgemäßen Verfahrens neben dem Kunststoff und den Fasern, bzw. vorzugsweise den gemahlenen Glasfasern noch weitere Materialien dem Gemisch beigefügt, so werden diese weiteren Materialien vorzugsweise ausgewählt aus der Gruppe bestehend aus Holzmehl, Kalkmehl, Steinmehl und/oder Additiven. Vorzugsweise wird also das erfindungsgemäße Verfahren bereitgestellt, wobei das Gemisch im Schritt b) zusätzlich Holzmehl, Kalkmehl, Steinmehl und/oder Additive umfasst.

Die bei dem erfindungsgemäßen Verfahren zum Schmelzen des Gemischs umfassend den thermoplastischen Kunststoff und auch später zum Abkühlen der durch das Verfahren hergestellten Platten eingesetzten Temperaturen hängen im Wesentlichen von dem eingesetzten Kunststoff ab. Vorzugsweise wird das erfindungsgemäße Verfahren wie hierin beschrieben derart durchgeführt, dass das Gemisch:
- im Schritt d) beim Hineinspritzen in die Form eine Temperatur von etwa 150°C-210°C, vorzugsweise 160°C-180°C oder von 170°C - 180°C hat;
- im Schritt e) auf etwa 80-110°C in der ersten Form heruntergekühlt wird; und
- im Schritt f) mit etwa 80-110°C in die zweite Form gelegt wird.

Gemäß dem erfindungsgemäßen Verfahren kann die Deckschicht bereits ein Dekor, z.B. eine Bedruckung aufweisen, die den gemäß dem erfindungsgemäßen Verfahren hergestellten Platten ein gewünschtes Aussehen (z.B. ein einer Holz- oder Steinoberfläche ähnelndes Aussehen) verleiht. Alternativ oder zusätzlich wird das erfindungsgemäße Verfahren derart durchgeführt, dass die erste Form eine Seite mit einer dreidimensionalen Struktur aufweist, anliegend an welche entweder die Deckschicht mit ihrer Oberseite in die Form eingelegt wird und auf der die Deckschicht beim Hineinspritzen des Gemisches in Schritt d) mit ihrer Oberseite anliegt oder auf welche Seite direkt das Gemisch im Schritt d) gespritzt wird, dadurch gekennzeichnet, dass die Deckschicht oder, falls keine Deckschicht vorgelegt wurde, die Trägerschicht den Abdruck der dreidimensionalen Struktur nach dem Abschluss des Verfahrens auf ihrer Oberseite aufweist.

Wurde in dem erfindungsgemäßen Verfahren eine Deckschicht in die Form vorgelegt, so wird durch die erhöhte Temperatur des in die Form eingespritzten Kunststoff-Faser-Gemisches die Deckschicht in der Form aufgeweicht und durch den ausgeübten Druck wird ein Abdruck der dreidimensionalen Struktur in dem Deckel der Form in der Oberseite der Deckschicht der durch das Verfahren hergestellten Platte erzeugt. Wird keine Deckschicht vorgelegt, so entsteht erfindungsgemäß durch die so gestaltete Form der besagte Abdruck der dreidimensionalen Struktur in der Oberseite der Trägerschicht. Das dreidimensionale Muster besteht gemäß der vorliegenden Erfindung vorzugsweise aus Vertiefungen und Erhöhungen in der Oberfläche der Form und deren korrespondierenden Erhöhungen und Vertiefungen in der Oberfläche der durch das Verfahren hergestellten Platte. Beispiele des Musters umfassen Noppen und eine baumrindenartige Maserung. Die Höhe der Erhöhungen und Vertiefungen kann gemäß der vorliegenden Erfindung unterschiedlich sein, vorzugsweise liegt sie bei oder unter 10, 9, 8, 7, 6, 5, 4 und 3 mm, besonders bevorzugt bei oder unter 2, 1, 0,9, 0,8, 0,7, 0,6, 0,5, 0,4, 0,3, 0,2 und 0,1 mm. Vorzugsweise liegt die Höhe der Erhöhungen und Vertiefungen bei 0,1 mm bis zu 2 mm, noch weiter bevorzugt 0,4 bis 0,7 mm, insbesondere bevorzugt bei 0,5 bis 0,6 mm. Neben der dekorativen Eindruck verleiht das erfindungsgemäß eingeprägte dreidimensionale Muster den gemäß dem vorliegenden Verfahren hergestellten Platten eine erhöhte Rutschsicherheit sowie eine verringerte Empfindlichkeit gegen Kratzer, Schäden und Verschmutzungen auf der Oberfläche, da diese weniger deutlich wahrgenommen werden als bei Platten, die eine glatte Oberfläche aufweisen, ohne ein dreidimensionales Muster.

Wie schon oben erwähnt, ist das erfindungsgemäße Verfahren darauf abgestimmt worden, sowohl durch die verwendeten Materialien wie durch die Verfahrensschritte, eine Biegung (Schüsseln) der so hergestellten Platten zu reduzieren bzw. zu vermeiden. Dementsprechend ist das erfindungsgemäße Verfahren wie hier offenbart dadurch gekennzeichnet, dass die mittels des Verfahrens hergestellten Platten maximal eine Krümmung von 0,5% jedoch nicht mehr als 2 mm bezogen auf die Seitenlänge aufweisen.

Desweiteren ist gemäß dem erfindungsgemäßen Verfahren die erste Form vorzugsweise derart ausgestaltet, dass an jeder Seite der Trägerschicht in den hergestellten Platten Verbindungsmittel entstehen, um die Platten mit mindestens einer benachbarten Platte verbinden zu können, wobei die Verbindungsmittel an jeder Seite der Trägerschicht sich gegenüberliegende Fortsätze und Aussparungen sind, wobei die Fortsätze zum formschlüssigen Eingreifen in die Aussparungen bestimmt sind.

In diesem Zusammenhang ist die in dem erfindungsgemäßen Verfahren eingesetzte Form ferner derart ausgestaltet, dass falls eine Deckschicht vorgelegt wird, diese sich entweder nicht über die Verbindungsmittel ausbreitet, so dass diese also jeweils frei zu den Seiten der Platte liegen und die Verbindungen auch nach dem Verlegen der Platten zu einem Verbund (und der Verbindung mittels der Verbindungsmittel) sichtbar sind, oder dass die Deckschicht sich zumindest auf einer Seite der Platte vollständig über den Verbindungsmitteln der jeweiligen Platte erstreckt und dass, wenn die Platte mit benachbarten Platten über die Verbindungsmittel seitlich miteinander verbunden ist, die Verbindungsmittel an den verbundenen Seiten von der Deckschicht bedeckt und somit nicht mehr sichtbar sind.

Wird keine Deckschicht vorgelegt, so wird gemäß der vorliegenden Erfindung die Form entsprechend derart ausgestaltet, dass die entstehende Oberseite der Trägerschicht sich nur bis zu den Ansätzen der Fortsätze/Zähne ausbreitet, so dass diese zu jeder Seite der Platte von oben sichtbar von dieser abstehen, oder die Oberseite der Trägerschicht ist derart gestaltet, das sie sich zumindest auf einer Seite der Platte vollständig über den Verbindungsmitteln der jeweiligen Platte erstreckt und dass wenn die Platte mit benachbarten Platten über die Verbindungsmittel seitlich miteinander verbunden ist, die Verbindungsmittel an den verbundenen Seiten von der Oberseite der Trägerschicht bedeckt sind. Ein Beispiel einer solchen verdeckten Gestaltung in der Fig. 1A zu sehen, wo eine beispielhafte Platte gemäß der vorliegenden Erfindung (bzw. hergestellt nach dem erfindungsgemäßen Verfahren) von unten zu sehen ist. Auf der rechten und oberen Kante der Platte ragen die Verbindungsmittel frei von der Platte weg, auf der linken und unteren Seite sind diese von der Oberseite der Trägerschicht, bzw. von der Deckschicht verdeckt. Wie man in Fig. 5 sieht, sind die Verbindungsmittel der erfindungsgemäßen Platten in dieser bevorzugten Ausführungsform, wenn in einem Verbund vorliegen in den Bereichen der Verbindung mit anderen Platten von oben nicht mehr zu sehen sondern von der Oberseite der Trägerschicht, bzw. von der Deckschicht verdeckt.

Vorzugsweise ist die in dem erfindungsgemäßen Verfahren verwendete Form dadurch gekennzeichnet, dass die Wand der Form, die gegenüber der Wand an der künftigen Oberseite der Platte liegt, also die Formwand auf der künftigen Unterseite der Form, derart ausgestaltet ist, dass sie ein Muster aus Vertiefungen und Erhöhungen aufweist, welche derart gestaltet sind, dass die Unterseite der durch das Verfahren hergestellten Platten den Abdruck dieses Musters aufweist. Vorzugsweise wird dieses Muster ausgewählt aus der Gruppe bestehend aus kreisförmigen, regelmäßig verteilten Vertiefungen welche ein Noppenmuster auf der Unterseite der hergestellten Platten erzeugen oder aus linienförmigen, untereinander verzweigten Erhöhungen, welche ein kanalartiges Muster auf der Unterseite der hergestellten Platten erzeugen, so dass die Platten rutschsicherer auf ihrer künftigen Unterlage, zum Beispiel einem Boden aufliegen und dass Flüssigkeiten, die nach dem Verlegen der erfindungsgemäß hergestellten Platten als ein zusammenhängender Verbund auf einer Unterlage unter den Verbund bzw. die Platten geraten einfacher abfließen können bzw. nicht unter den Platten stauen.

Ein umfassenderes Verständnis der Erfindung kann anhand der folgenden spezifischen Beispiele und die Figuren erlangt werden, welche hierin lediglich einer beispielhaften Illustrierung dienen sollen und nicht dazu gedacht sind, die Erfindung in irgendeiner Weise einzuschränken.

### Beispiele

### Beispiel 1

Zur Herstellung von Platten wurde in eine Spritzgussform eine aus PVC bestehende 2 mm dicke Deckschicht vorgelegt, welche einen Druck aufgewiesen hatte, der einem Holzmuster ähnelte. Die Deckschicht war selbst mehrschichtig und umfasste eine untere Bodenschicht, eine darauf liegende Dekorschicht mit dem Druck und darauf eine transparente Schutzschicht, wobei die Deckschicht mit der transparenten Schutzschicht zu der Wand hingelegt wurde, die gegenüber der Einspritzöffnung der Form lag.

Ein Gemisch aus 20kg gemahlenen, 2-3 mm langen Glasfasern und 80 kg PVC-Granulat wurde über einen Trichter in die die Gänge der rotierenden Schnecke eingefügt, dort auf 170°C erhitzt und als Schmelze durch die Düse in die Form auf die Rückseite der Deckschicht unter einem Druck von 5000 Bar eingespritzt.

PVC-Granulat bestehend aus den folgenden Bestandteilen wurde verwendet: S-PVC K-Wert 70 mit 100 phr ("parts per hundred rubber" also bezogen auf 100 (Massen-)Teile des Grundpolymers), Paraloid K 125 mit 1 phr als acrylischer Verarbeitungshelfer (Additiv), DOTP mit 40 phr (nicht Phthalat-basierter Weichmacher), CaZn-Pulver mit 2 phr (Baerostab GS 8807-27), Baerolub FTA 0,15 phr (als externes Schmiermittel), CaCOs mit 60 phr.

Die Form wurde auf 100°C runtergekühlt, die Form (Spritzgusskammer) geöffnet, die entstandene Platte aus der Form genommen und in eine zweite Form gelegt, welche einen nach oben oder unten gebogenen Boden und auch einen entsprechend passend ausgeformten Deckel aufweist. Die jeweilige Platte wurde in dieser Form belassen und ein Druck von 300 Bar auf die Platte ausgeübt, um den Effekt des gebogenen Bodens zu unterstützen und dem Schüsseln entgegenzuwirken, bis die Platte eine Temperatur von etwa 30°C aufwies. Dazu würde die Platte mit der Biegung entgegengerichtet zu der Biegung des Bodens (und der gleichen Biegung des Deckels der Form) in die Form gelegt und danach Druck auf die Platte während des Abkühlens ausgeübt.

Die jeweilige Platte wurde nun in eine weitere Form diesmal mit einem ebenen Boden transferiert und dort ebenfalls unter einem Druck von 300 Bar auf etwa 10°C runtergekühlt.

Das Verfahren wurde in unterschiedlich großen Spritzgussformen mit dem gleichen Material durchgeführt, so dass man in dem einem Fall quadratische Platten mit Ausmaßen von 60cm x 60 cm und einer Gesamtdicke von 7,16 mm erhalten hatte und in dem anderen Fall rechteckige Platten mit den Maßen 33 cm x 63 cm und einer Gesamtdicke von 8,1 mm. Hiernach wurden die hergestellten Platten auf mögliche Schäden und mögliche Biegung untersucht. Die Platten wiesen dabei zumeist eine Krümmung von 0,5% und weniger auf.

### Beispiel 2

6 Platten mit 7,16 mm und 6 Platten mit 8,1 mm Dicke hergestellt im Beispiel 1 wurden einer Brandprüfung zur Klassifizierung gemäß EN 13501-1:2010 unterzogen. Die Platten waren mehrfarbig, 6 wiesen kein Muster auf, 6 hatten ein farbiges, holzartiges Muster und lagen bei dem Test auf einer Faserzementplatte auf.

Es wurde die Entzündbarkeit bei direkter Flammeneinwirkung gemäß EN ISO 11925-2:2010 und das Brandverhalten unter Wärmestrahlung gemäß EN ISO 9239-1:2010 getestet.

Keine der getesteten Platten hat sich entzündet. Bei dem Brandverhalten war kein Schmelzen/Ansengen während der Vorbestrahlung, keine Aufwellung/Zusammenziehen im Zündbereich, kein Durchbrennen auf die Trägerfläche, kein Aufflackern, keine Blasenbildung und auch kein Glimmen nach Verlöschen der Zündflamme zu beobachten.

Alle Platten wurden bezüglich des Brandverhaltens als B_{fl}, und bezüglich der Rauchentwicklung als s1 klassifiziert. Das Abtropfen wurde nicht klassifiziert, da es bei Bodenbelägen unerheblich ist, es ist aber in den Tests auch kein Abtropfen beobachtet worden.

### Beispiel 3

Platten hergestellt im Beispiel 1 wurden Festigkeitstests nach EN ISO 23999 [EN 434] durchgeführt.

Die Platten zeigten bei Erhitzung auf 95-100°C eine Ausdehnung von nur 0,12-0,16 %. Der Schrumpf (Maßänderung) der Plattendimensionen bei 25-35°C lag bei nur 0,01-0,02 %. Schließlich lag die Punktlast, welche die nach dem erfindungsgemäßen Verfahren hergestellten Platten tragen konnten bei 65-70 kg/cm² bei Raumtemperatur (22-25°C).

Dagegen zeigten Platten ohne Faserbeimischung bei Erhitzung auf 95-100°C eine Ausdehnung von 1,2-1,6 %, einen Schumpf bei 25-35°C von 1,2-1,6 % und eine Punktlast, von 30-35 kg/cm2 bei Raumtemperatur (22-25°C).

### Bezugszeichenliste

Dargestellt sind nur die einfachen Bezugszeichen, ohne Aufzählungsstriche, die bei Beschreibungen mehrerer Entitäten einer gleichen Gattung eingesetzt werden, also Beispielsweise (10) für eine Platte und (10') für eine weitere Platte, die mit der ersten z.B. verbunden wird.
- 10: Platte
- 12: Außenkante
- 14: Verbindungsmittel
- 16: Dichtlippe
- 17: Nut
- 18: Verdrängungskanal
- 19: Verdrängungskanal unterhalb und bevorzugt anschließend an die Nut (17)
- 20: Fortsatz der Verzahnung
- 22: Aussparung der Verzahnung
- 24: Plattenoberfläche/Oberseite der Platte bzw. der Deckschicht
- 26: Plattenboden/Unterseite der Trägerschicht
- 28: Neigungswinkel der Dichtlippe (16)
- 30: Abstand der Spitze der Dichtlippe (16) von der oberen Außenkante des Bodenelements (10)
- 32: Dicke der Deckschicht (110) bzw. bei einschichtigen Platten Abstand von der Plattenoberfläche bis zum Anfang der Oberkante der Dichtlippe (16)
- 36: Eindringversatz der Unterkante der Dichtlippe in die Außenkante der Platte
- 38: Tiefe des Verdrängungskanals (18)
- 40: Breite des Verdrängungskanals (18)
- 42: Abstand von der Spitze der Dichtlippe (16) bis zur Oberkante des Verzahnungsbereiches
- 44: Höhe des Bodenelements
- 110: Deckschicht
- 120: Trägerschicht

## Patentansprüche

1. Verfahren zur Herstellung von Platten umfassend eine Trägerschicht und optional eine Deckschicht umfassend die folgenden Schritte in folgender Reihenfolge:
a) optionales Vorlegen der Deckschicht in einer ersten Form;
b) Erzeugung eines Gemisches umfassend einen thermoplastischen Kunststoff und zerkleinerte Fasern;
c) Erhitzen des Gemisches aus b) unter Mischen bis zum Schmelzen des thermoplastischen Kunststoffs;
d) Hineinspritzen des erhitzten Gemisches in die erste Form (auf die Rückseite der Deckschicht);
e) Kühlung der Platte in der ersten Form auf eine Temperatur, bei der die Platte stabil genug ist, um aus der ersten Form genommen zu werden;
f) Herausnehmen der Platte aus der ersten Form und einlegen in eine zweite Form, die eine Biegung aufweist in der Gegenrichtung der zu erwartenden Schüsselung der Platte;
g) Abkühlen der Platte in der zweiten Form auf etwa 30°C;
h) Transfer der Platte in eine dritte Form, wobei die dritte Form eine Ebene als Boden aufweist, und die Platte auf diese Ebene gelegt wird; und
i) Herunterkühlen der Platte in der dritten Form auf 15-20°C unter die Raumtemperatur.

2. Verfahren nach Anspruch 1, wobei der thermoplastische Kunststoff ausgewählt wird aus einem Polyolefin und Polyvinylchlorid, wobei die zerkleinerten Fasern gemahlene Glasfasern sind, wobei die Deckschicht, falls vorhanden, aus Polyvinylchlorid (PVC) besteht.

3. Verfahren nach Anspruch 1 oder 2, wobei das Gemisch im Schritt b) zusätzlich Holzfasern, Kalkmehl, Steinmehl und/oder Additive umfasst.

4. Verfahren nach einem der Ansprüche 1 bis 3, wobei das Gemisch:
- im Schritt d) beim Hineinspritzen in die Form eine Temperatur von etwa 150°C-210°C hat;
- im Schritt e) auf etwa 80-110°C in der ersten Form heruntergekühlt wird; und
- im Schritt f) mit etwa 80-110°C in die zweite Form gelegt wird.

5. Verfahren nach einem der Ansprüche 1 bis 4, wobei die erste Form eine Seite mit einer dreidimensionalen Struktur aufweist, **dadurch gekennzeichnet, dass** die hergestellte Platte auf ihrer Oberseite, oder falls die Deckschicht in die Form vorgelegt wurde, auf der Oberseite der Deckschicht den Abdruck der dreidimensionalen Struktur nach dem Abschluss des Verfahrens aufweist.

6. Verfahren nach einem der Ansprüche 1 bis 5, wobei die hergestellten Platten **dadurch gekennzeichnet sind, dass** sie maximal eine Krümmung von 0,5% jedoch nicht mehr als 2 mm bezogen auf die Seitenlänge aufweisen.

7. Verfahren nach einem der Ansprüche 1 bis 6, wobei die erste Form derart ausgestaltet ist, dass an jeder Seite der Trägerschicht in den hergestellten Platten Verbindungsmittel entstehen, um die Platten mit mindestens einer benachbarten Platte verbinden zu können, wobei die Verbindungsmittel an jeder Seite der Trägerschicht sich gegenüberliegende Fortsätze und Aussparungen sind, wobei die Fortsätze zum formschlüssigen Eingreifen in die Aussparungen bestimmt sind.

8. Verfahren nach Anspruch 7, wobei die Deckschicht derart vorgelegt wird, dass sie zumindest auf einer Seite der Platte sich vollständig über den Verbindungsmitteln der jeweiligen Platte erstreckt und dass wenn die Platte mit einer weiteren Platte über die Verbindungsmittel seitlich miteinander verbunden ist, die Verbindungsmittel an den verbundenen Seiten von der Deckschicht bedeckt sind.

## Claims

1. A method of manufacturing plates comprising a carrier layer and optionally a top layer comprising the following steps in the following order:
a) optional pre-laying of the top layer in a first mold;
b) production of a mixture comprising a thermoplastic plastic and chopped fibers;
c) heating the mixture from b) while mixing until the thermoplastic plastic melts;
d) injecting the heated mixture into the first mold (on the back of the top layer);
e) cooling the plate in the first mold to a temperature at which the plate is stable enough to be removed from the first mold;
f) removing the plate from the first mold and placing it in a second mold, which has a bend in the opposite direction to the expected cupping of the plate;
g) cooling the plate in the second mold to about 30°C;
h) transferring the plate to a third mold, the third mold having a plane as a bottom, and placing the plate on this plane; and
i) cooling the plate in the third mold to 15-20°C below room temperature.

2. Method according to claim 1, wherein the thermoplastic plastic is selected from a polyolefin and polyvinyl chloride, wherein the chopped fibers are grinded glass fibers, wherein the top layer, if present, is polyvinyl chloride (PVC).

3. Method according to claim 1 or 2, wherein the mixture in step b) additionally comprises wood fibers, lime powder, stone powder and/or additives.

4. Method according to any one of claims 1 to 3, wherein the mixture:
- in step d) has a temperature of about 150°C-210°C when injected into the mold;
- in step e) is cooled down to about 80-1 10°C in the first mold; and
- in step f) is placed in the second mold at about 80-110°C.

5. Method according to any one of claims 1 to 4, wherein the first mold has a side with a three-dimensional structure, **characterized in that** the produced plate has on its upper side, or if the top layer has been pre-laid into the mold, on the upper side of the top layer, the imprint of the three-dimensional structure after completion of the method.

6. Method according to any one of claims 1 to 5, wherein the plates produced are **characterized in that** they have a maximum curvature of 0.5% but not more than 2 mm relative to the side length.

7. Method according to one of claims 1 to 6, wherein the first mold is designed in such a way that connecting means are formed on each side of the carrier layer in the manufactured plates in order to be able to connect the plates to at least one adjacent plate, wherein the connecting means on each side of the carrier layer are projections and recesses located opposite each other, wherein the projections are intended for interlocking engagement in the recesses.

8. Method according to claim 7, wherein the top layer is pre-laid in such a way that it extends completely over the connecting means of the respective plate on at least one side of the plate and that when the plate is laterally connected to another plate via the connecting means, the connecting means on the connected sides are covered by the top layer.

## Revendications

1. Procédé de fabrication de panneaux comprenant une couche de support et éventuellement une couche de surface, comprenant les étapes successives suivantes :
a) Présentation optionnelle de la couche de surface dans un premier moule ;
b) Production d'un mélange comprenant un thermoplastique et des fibres broyées ;
c) Chauffage du mélange de b) sous agitation jusqu'à la fusion du thermoplastique ;
d) Injection du mélange chauffé dans le premier moule (sur le dos de la couche de surface) ;
e) Refroidissement du panneau dans le premier moule à une température à laquelle le panneau est suffisamment stable pour être retiré du premier moule ;
f) Retrait du panneau du premier moule et insertion dans un deuxième moule, qui présente une courbure dans la direction opposée à la déformation attendue du panneau ;
g) Refroidissement du panneau dans le deuxième moule à environ 30°C ;
h) Transfert du panneau dans un troisième moule, le troisième moule ayant une surface plane comme fond, le panneau étant placé sur ladite surface plane ;
i) Refroidissement du panneau dans le troisième moule à une température de 15-20°C en dessous de la température ambiante.

2. Procédé selon la revendication 1, dans lequel le thermoplastique est choisi parmi une polyoléfine et du polychlorure de vinyle, les fibres broyées étant des fibres de verre moulues, la couche de surface, si présente, étant en polychlorure de vinyle (PVC).

3. Procédé selon la revendication 1 ou 2, dans lequel le mélange à l'étape b) comprend en outre des fibres de bois, de la poudre de chaux, de la poudre de pierre et/ou des additifs.

4. Procédé selon l'une des revendications 1 à 3, dans lequel le mélange :
- à l'étape d), lors de l'injection dans le moule a une température d'environ 150°C-210°C ;
- à l'étape e), est refroidi à environ 80-110°C dans le premier moule ; et
- à l'étape f), est placé dans le deuxième moule à environ 80-110°C.

5. Procédé selon l'une des revendications 1 à 4, dans lequel le premier moule présente un côté avec une structure tridimensionnelle, **caractérisé en ce que** le panneau fabriqué présente sur sa face supérieure, ou si la couche de surface a été présentée dans le moule, sur la face supérieure de la couche de surface, l'empreinte de la structure tridimensionnelle après la fin du procédé.

6. Procédé selon l'une des revendications 1 à 5, dans lequel les panneaux fabriqués sont **caractérisés en ce qu'**ils présentent une courbure maximale de 0,5%, mais pas supérieure à 2 mm par rapport à la longueur des côtés.

7. Procédé selon l'une des revendications 1 à 6, dans lequel le premier moule est conçu de sorte que des moyens de connexion soient formés sur chaque côté de la couche de support dans les panneaux fabriqués, afin de pouvoir connecter les panneaux à au moins un panneau adjacent, les moyens de connexion sur chaque côté de la couche de support étant des saillies et des évidements opposés, les saillies étant destinées à s'engager de manière ajustée dans les évidements.

8. Procédé selon la revendication 7, dans lequel la couche de surface est présentée de telle manière qu'elle s'étende complètement sur les moyens de connexion de chaque panneau sur au moins un côté du panneau, et que lorsque le panneau est connecté à un autre panneau par les moyens de connexion latéraux, les moyens de connexion sur les côtés connectés sont recouverts par la couche de surface.
